Europäisches Patentamt

European Patent Office

Office européen des brevets

(19)

(11) **EP 0 671 690 B1**

(12) **EUROPÄISCHE PATENTSCHRIFT**

(45) Veröffentlichungstag und Bekanntmachung des Hinweises auf die Patenterteilung:
**07.11.2001 Patentblatt 2001/45**

(51) Int Cl.$^7$: **G06F 12/12**

(21) Anmeldenummer: **95102926.3**

(22) Anmeldetag: **02.03.1995**

(54) **Verfahren zur Steuerung der Datenverfügbarkeit in Zwischenspeichern bei Computern**

Method for controlling availability of data in intermediate memories in computers

Procédé pour commander la disponibilité de données dans des mémoires intermediaires dans des ordinateurs

(84) Benannte Vertragsstaaten:
**BE FR GB IT NL SE**

(30) Priorität: **08.03.1994 DE 4407626**

(43) Veröffentlichungstag der Anmeldung:
**13.09.1995 Patentblatt 1995/37**

(73) Patentinhaber: **Marks, Karl Michael**
**D-58642 Iserlohn (DE)**

(72) Erfinder: **Marks, Karl Michael**
**D-58642 Iserlohn (DE)**

(74) Vertreter: **Schmidt, Karl Michael et al**
**c/o Rechtsanwälte Sonneschein & Porada,**
**Lindenstrasse 27**
**47249 Duisburg (DE)**

(56) Entgegenhaltungen:
**EP-A- 0 568 221          US-A- 3 958 228**

• **IBM TECHNICAL DISCLOSURE BULLETIN, Bd. 21, Nr. 6, November 1978 NEW YORK US, Seite 22290 FURNEY 'Selection of least recently used slot with bad entry and locked slots involved'**

**Beschreibung**

Die Erfindung betrifft ein Verfahren sowie eine Einrichtung zur Steuerung der Datenverfügbarkeit in Zwischenspeichern bei Computern insbesondere bei Cache-Speichern, bei welchen der Adressraum eines Hauptspeichers über eine A-wege-assoziative Abbildung auf den kleineren Adressraum eines Cache-Speichers abgebildet wird, gemäß Oberbegriff des Patentanspruches 1.

Bei Verfahren dieser Art wird ein Teil der Adresse als Index in die Adressräume der A Sets verwendet und zu jedem Index wird nachgehalten, in welcher Reihenfolge die A Einträge zuletzt gebraucht wurden, um dann, wenn ein Eintrag ersetzt werden muß, den Eintrag auszuwählen, dessen Gebrauch am längsten zurückliegt (LRU), wobei sich die Anzahl der möglichen chronologischen Aktualitätszustände (Tupel) für eine als vollständig zu bezeichnende LRU-Kodierung zu X=A! ergibt.

Die Anwendungsgebiete solcher Verfahren und Einrichtungen sind Computer bzw. Computeranlagen, welche im Kern im wesentlichen aus Mikroprozessoren und mit ihnen im Datenaustausch bzw. Datenzugriff stehenden Hauptspeichern bestehen. Zwischen Hauptspeicher und Mikroprozessor sind zur Steigerung der Leistung häufig schnelle Zwischenspeicher angeordnet, sogenannte Caches.
In diesen Caches werden die zuletzt am häufigsten benötigten Daten zwischengespeichert. Der Adressraum eines Caches ist in der Regel kleiner als der eines Hauptspeichers. Aus diesem Grund muß der Cache-Speicher entsprechend organisiert werden, und es gibt im Stand der Technik hierzu verschiedene Organisationsverfahren, die sich meist in der Zahl A der Sets und der zugehörigen A-wege-assoziativen Abbildung des Hauptspeicheradressraumes des Caches unterscheiden. Am häufigsten findet man die direkte Abbildung (A=1), die zwei-wege-assoziative (A=2), die vierwege-assoziative (A=4), und bei kleinen Caches die acht-wege-assoziative Abbildung (A=8).

Bei einer A-wege-assoziativen Auslegung des Caches ist die Effizienz dann am höchsten, wenn die Aktualität der A Einträge zu einem Index nachgehalten wird. Dazu wird der Aktualitätszustand bei jedem Zugriff auf den Cache-Speicher erneuert.

Findet der Zugriff die geforderten Daten im Cache-Speicher, so wird derjenige Eintrag, der angefordert wurde zum zuletzt benutzten (MRU=most recently used) Eintrag. Alle vorher aktuelleren Einträge werden in ihrer Aktualität um eine Stufe degradiert. Falls die benötigten Daten nicht im Cache-Speicher vorhanden sind, wird der Eintrag, dessen Cache-Zugriff am längsten zurückliegt (LRU=Least recently used), durch die angeforderten neuen Daten ersetzt und automatisch zum aktuellsten Eintrag (MRU).

Da immer der LRU-Eintrag ersetzt wird, heißen diese entsprechenden Aktualitätssteuerungsverfahren auch LRU-Verfahren.
Diese LRU-Verfahren halten die chronologische Zugriffshistorie für die jeweils A Einträge nach, so daß aus der entsprechenden Kodierung ermittelt werden kann, für welchen der A Einträge der letzte Zugriff am längsten zurückliegt. Je nach Zahl A der Einträge wird eine entsprechende Zahl "Lc" von Bits zum Nachhalten der Aktualitäten benötigt. Für A=2 wird nur ein Bit benötigt, in dem abgespeichert wird, welcher der beiden Einträge (0 oder 1) die geringste Aktualität hat, da es nur die Tupel 01 und 10 gibt, wobei die erste Ziffer den MRU- und die letzte Ziffer den LRU-Eintrag indentifiziert. Für A=4 steigt die Zahl der Tupel auf A!=24 (A!=A Fakultät), wobei jedes Tupel aus vier Ziffern (0,1,2,3) besteht, deren Reihenfolge die Aktualitätsrangfolge der Einträge angibt. Es ergeben sich also 24 Tupel (0123, 0132, 0213, 0231, 0312, 0321, 1023, 1032, 1203, 1230, 1302, 1320, 2013, 2031, 2103, 2130, 2301, 2310, 3012, 3021, 3102, 3120, 3201, 3210). Die Zahl "Lc" der Bits zur Kodierung der Tupel ergibt sich aus

$$Lc \geq Lc_{min}, \text{ wobei } Lc_{min} = \log_2 (A)$$

In der Praxis werden häufig auch $Lc > Lc_{min}$ verwendet, um die Dekoderlogik zu minimieren (z.B. bei Cache-Kontroller 88200 von Motorola), oder aber die Auflösung der Aktualitätsreihenfolge wird verringert, um mit weniger Bits und Logik auszukommen.

Für A=8 steigt die Zahl der Tupel auf 40320 (A!) und es werden mindestens 16 Bit zur Kodierung benötigt. Die meisten Kodierungen verwenden noch mehr Bits, um die Tiefe der Dekoderlogik zu minimieren.

Die Effizienz eines Cache-Speichers hängt davon ab, wie hoch der Prozentsatz der Zugriffe ist, bei denen die benötigten Daten im Cache-Speicher vorgefunden werden, und von der Verbesserung der Zugriffszeit des Cache-Speichers gegenüber dem . Hauptspeicher, üblicherweise eine Verbesserung um den Faktor 2 bis 4. Werden die Daten jedoch nicht im Cache vorgefunden, so ist die Zugriffszeit je nach Rechnerarchitektur sogar größer oder bestenfalls gleich der Zugriffszeit auf den Hauptspeicher. In Echtzeit-Anwendungen, in denen maximale Antwortzeiten garantiert werden müssen, muß immer der schlechteste Fall angenommen werden, daß heißt der Fall, daß alle Daten aus dem Hauptspeicher geholt werden müssen, da keine der benötigten Daten im Cache vorhanden sind. Die Folge ist, daß Cache-Speicher im Echtzeitbereich kaum eine Steigerung der garantierten Antwortzeiten erlauben, es sei denn die Verfügbarkeit der benötigten Daten im Cache-Speicher kann garantiert werden.

Die benannte garantierte Verfügbarkeit von Daten kann durch sogenanntes Cachefreezing oder Cache-locking, bei dem der Inhalt des Caches ganz oder teilweise eingefroren wird, sichergestellt werden. Cache-freezing ist zum Beispiel bekannt von dem Mikroprozessor MC88110 der Firma Motorola, beschrieben im MC88110 Mikroprozessorhandbuch von Motorola, der bei einem 2-wege-assoziativen Cache-Speicher das Einfrieren eines oder beider Sets als ganzes erlaubt. Dieses als freezing bezeichnete Verfahren, welches jeweils immer ganze Sets fixiert, ist nur dann effizient, wenn die Größe des zu fixierenden Speicherbereiches auch der eines oder mehrerer Sets entspricht, da der Rest des Sets sonst nicht sinnvoll genutzt werden kann.

Feinere Granularitäten beim Locking von Cache sind aus Großrechneranwendungen von IBM bekannt, bei denen das Locking jedoch zur Realisierung von Checkpoints verwendet wird, die es ermöglichen, Änderungen seit dem letzten Checkpoint im Fehlerfalle zu verwerfen, da das Locking ein Zurückschreiben der zwischenzeitlich veränderten Daten bis zur Freigabe am nächsten Checkpoint verhindert (EP 0061570). Dies erfordert jedoch einen hohen Hardwareaufwand, der unter anderem dedizierte Lock-Bits für jeden Cache-Eintrag einschließt, sowie explizite Befehle zum Handhaben des Locking im Prozessorbefehlssatz.
Ein dem Cache-Locking ähnliches Verfahren zur Modifikation des Replacement-Algorithmus durch Einführung eines sogenannten Cache Reuse Bits wurde von IBM vorgeschlagen (IBM TDB, Vol.30,Nr. 6, Nov. 1987, S 16/17). Ein Cache-Locking Verfahren im Zusammenhang mit einem Pseudo-LRU-Algorithmus wurde von Sun-Microsystems zum Patent angemeldet ( EP 0568221). Dieses Verfahren ist jedoch gerade für größere Caches relativ aufwendig, da jeweils ein dediziertes Lock-Bit pro Cache-Line benötigt wird und das Verfahren Sicherheitsmaßnahmen zur Verhinderung von Deadlock-Situationen benötigt.

Das oben genannte Argument der nicht effizienten Ausnutzung einzeln oder gemeinsam gelockter Sets fällt um so mehr ins Gewicht, je größer das Cache und je gröber folglich die Granularität des Einfriermechanismus ist.

Inbesondere bei den heute oft zu findenden L2 Caches (zweite Ebene zwischen on-chip-Cache des Prozessors und dem Hauptspeicher) mit einer Größe von 256 KByte bis 2MByte, ist ein Verfahren, das ganze Sets einfriert nicht sehr praktikabel. Insbesondere in Systemen mit mehreren Prozessorknoten bestehend aus Prozessor und L2-Cache, führt eine veringerte Effizienz der Caches zu einem signifikanten Einbruch der Systemleistung.

Der Erfindung liegt daher die Aufgabe zugrunde, ein Verfahren zur Kodierung der Zugriffsaktualität (LRU,MRU) der gattungsgemäßen Art dahingehend weiterzubilden, daß ein dynamisch kontrollierbares Einfrieren von Cache-Inhalten ohne Verschwendung von Cache-Resourcen mit gleichzeitig minimalem Hardwareaufwand ermöglicht wird.

Die gestellte Aufgabe ist hinsichtlich eines Verfahrenes gemäß Oberbegriff des Patentanspruches 1 erfindungsgemäß durch die kennzeichnenden Merkmale des Patentanspruches 1 gelöst.

US-3,958 228-A offenbart die im Oberbegriff genannten Merkmale und Verfahrensschritte.

Die Erfindung geht hinsichtlich eines Verfahrens von der Verwendung einer 4-wegeassoziativen Cache-Organisation mit vollständig kodierter LRU-Ersetzung aus. Um die oben bereits für die 4-wege-Assoziation beschriebenen 24 möglichen Aktualitätszustände (Tupel) für den Fall einer vollständigen LRU-Kodierung kodieren zu können werden mindestens 5 Bit benötigt.

Durch diese 5 Bit sind $2^5$=32 Kodierungen verfügbar, wobei für das reine herkömmliche LRU-Verfahren nur 24 Kodierungen zur Auskodierung der 24 Tupel benötigt werden. Der Kern der Erfindung besteht nun darin, nicht alle X Aktualitätszustände (Tupel) einzufrieren oder einfrieren zu wollen, sondern nur ein Teil der möglichen Tupel einfrierbar zu gestalten. Dies sei für den Fall der vollständigen LRU-Kodierung, also für X=A! ausgeführt. Da von den 32 durch die 5 Bit verfügbaren Kodierungen nur 24 Tupel beim 4-wege-assoziativen Cache-Speicher entstehen, können mit den verbleibenden 8 Kodierungen Cache-Zustände definiert werden, mit denen nach dem erfindungsgemäßen Verfahren eine partielles Cacheeinfrieren vorgenommen werden kann. In weiterer Ausgestaltung der verfahrensgemäßen Erfindung werden diese partiell einfrierbaren Aktualitätszustände aus den übrigen normalen 24 Aktualitätszuständen (Tupel) generiert. Dabei werden immer jeweils 4 Aktualitätszustände (Tupel) des herkömmlichen LRU-Verfahrens, bei denen keine Einfrierung vorgenommen wird, auf einen einfrierbaren Aktualitätszustand abgebildet.

Bei diesen einfrierbaren Aktualitätszuständen ist jeweils der Eintrag aus dem Set 0 eingefroren. Es ergeben sich also bei dieser 4-wege-assoziativen Abbildung durch die erfindungsgemäße Zuordnung 6 erfindungsgemäß definierte Aktualitätszustände, bei denen der Set 0 eingefroren ist. Das heißt, daß von den verbleibenden möglichen 8 Kodierungen noch 2 übrig sind, die zur Definition von 2 weiteren Aktualitätszuständen dienen, bei denen die Einträge der Sets 0 und 1 eingefroren sind. In weiterer Ausgestaltung der Erfindung werden die Übergänge von den normalen 24 Aktualitätszuständen (Tupel) in die einfrierbaren Zustände durch 4 Funktionen generiert.

a: ALLOC0; bei dieser Funktion werden alle Übergänge der normalen Aktualitätszustände (Tupel oder LRUs) in L0-Zustände vorbereitet durch Einlesen der einzufrierenden Daten aus dem Hauptspeicher in die Einträge des einfrierbaren Set 0 und Übergang des Aktualitätszustandes in die dedizierten Zustände

b: FREEZE0; bei dieser Funktion werden nun alle im Schritt "a" allokierten Zustände mit allokiertem Sets 0 eingefroren.

c: ALLOC1; bei dieser Funktion werden alle Übergänge von den einfrierbaren L0-Zuständen in L01-Zustände durch Einlesen der Daten aus dem Hauptspeicher in die dedizierten Einträge für den zweiten MRU-Rang vollzogen, wobei ALLOC1 den Zustand FREEZE0 miteinschließt.

d: FREEZE01; bei dieser Funktion werden alle L0 und L01-Zustände, bei denen 0 und 1 eingefroren werden sollen, eingefroren.

Insgesamt ergibt sich, daß alle Gruppen der normalen LRUs, die sich nicht in dem jeweils eingefrorenen Zustand befinden, von diesem Einfrieren nicht betroffen sind, und nach dem normalen LRU-Verfahren weiterarbeiten. Dies bedeutet, daß nur der Teil des Caches, der tatsächlich eingefroren werden muß auch real eingefroren ist. Somit ergibt sich die Möglichkeit bis zu einem Viertel des Caches (für die 6 L0-Zustände) oder bis zur Hälfte des Caches (für die L0-und L01-Zustände) einzufrieren.

Die einzelnen Übergänge zwischen den normalen Cache-Aktualitätszuständen und den einfrierbaren erfindungsgemäßen Zuständen ist weiter unten noch in den Figuren dargestellt, an denen das Verfahren noch anschaulicher beschrieben ist.

Somit besteht die erfindungsgemäße Weiterbildung in einer entsprechenden Weiterbildung bzw. Bereicherung eines Standard LRU-Dekoders, der die oben angegebene verfahrensgemäße Vorgehensweise ermöglicht.

Die Erfindung ist in der Zeichnung dargestellt und nachfolgend näher beschrieben.

Es zeigt:

Fig.1:      Zustandsdiagramm mit Standard-LRUs und den erfindungsgemäßen einfrierbaren Cache-Zuständen, sowie den erfindungsgemäßen Übergängen zwischen Standard-LRU-Zuständen und den L0-Zuständen bei eingeschalteter Funktion ALLOC0=1

Fig.2:      Zustandsübergänge zwischen den eingefrorenen L0-Zuständen bei eingeschalteter Funktion FREEZE0=1.

Fig.3:      Zustandsübergänge der einfrierbaren L0-Zustände in L01-Zustände bei eingeschalteter Funktion ALLOC1=1

Fig.4:      Zustandsübergänge zwischen den eingefrorenen L01-Zuständen bei eingeschalteter Funktion FREEZE01=1

Fig.5:      Rückbildung von L01-Zuständen in L0-Zuständen bei ausgeschalteter Funktion FREEZE01=0

Fig.6a,6b:      Rückbildung von L01- und L0-Zuständen bei ausgeschalteten Funktionen FREEZE01=0 und FREEZE0=0

Fig.7:      Übersicht aller funktional verknüpften Einrichtungselemente

Fig.8:      NEXT-LRU-Dekoder

Fig.9:      SELECT-ENTRY-Dekoder

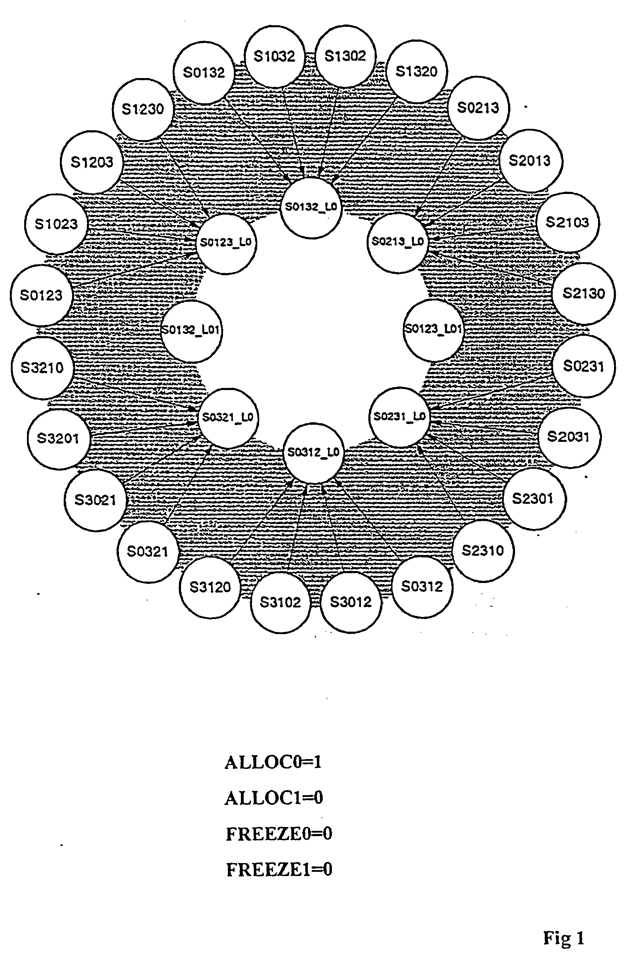

Fig. 1 zeigt in einer Gesamtdarstellung einen äußeren und einen inneren Kreis von Cache-Zuständen. Der äußere Kreis wird gebildet von den 24 möglichen Aktualitätszuständen (Tupel) die in diesem Diagramm die nach einem herkömmlichen LRU-Verfahren arbeitenden und daher frei auf dem Ring beweglichen Cache-Zustände darstellen. Daß heißt der äußere Kreis der 24 Tupel repräsentiert zunächst 24 nichteinfrierbare Zustände. Der innere Kreis wird von den 8 nun erfindungsgemäß kodierten definierten einfrierbaren Cache-Zuständen gebildet, bei denen 6 Cache-Zustände den Set 0 und
2 Cache-Zustände die Sets 0 und 1 einfrieren. Jedem der 6 L0-Zustände (Set 0 eingefroren) sind 4 normale Aktualitätszustände vom Außenkreis zugeordnet. Dieser Übergang wird mit der Funktion ALLOC0=1 vollzogen. Die Funktionen ALLOC1, FREEZE0, und FREEZE1 sind dabei nicht tätig. Die Funktion ALLOC0=1 bedeutet dabei, daß aus einem der 4, dem entsprechenden L0-Zustand zugeordneten Standard LRU, der Übergang in den mit Set 0 eingefrorenen Zustand dadurch vorbereitet wird, daß die einzufrierenden Daten aus dem Hauptspeicher in diese dedizierten, als MRU Einträge bezeichneten Zustände auf dem Innenkreis eingelesen werden. Damit ist der Übergang von den Standard LRUs zu den nun einfrierbaren zusätzlich definierten MRUs vollzogen.

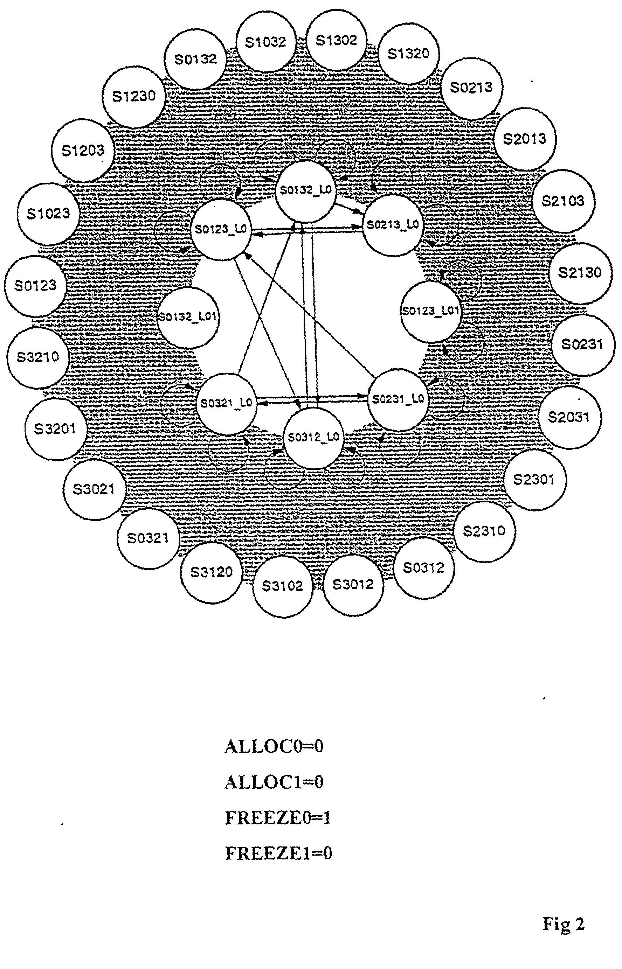

Fig.2 zeigt den eingefrorenen Zustand des Set 0, welcher durch Aktivieren der Funktion FREEZE0=1 realisiert wird. In diesem Zustand können die Cache Tupel, die sich in einem solchen dedizierten L0-Zustand (auf dem Innenkreis) befinden nur in einen anderen Zustand mit dem Suffix-L0 wechseln.

Der Set 0 bleibt dadurch als MRU-Set festgeschrieben, daß heißt eingefroren, und dieses Tupel ist dann degeneriert zur 3-wege-Assoziativität.
Das heißt mit anderen Worten, daß nach Einfrieren eines solchen Zustandes nur noch 3 der ursprünglich 4 Sets frei, d.h. nicht eingefroren, permutieren können. Dies führt dann zu den dort dargestellten Übergängen zwischen den einzelnen eingefrorenen Zuständen. Alle nun durch diesen Übergang und durch das Einfrieren nicht betroffenen LRU-Zustände auf dem Außenkreis können sich weiterhin frei bewegen, daß heißt weiterhin auf allen 4 Sets hinsichtlich ihres Aktualitätsranges permutieren.

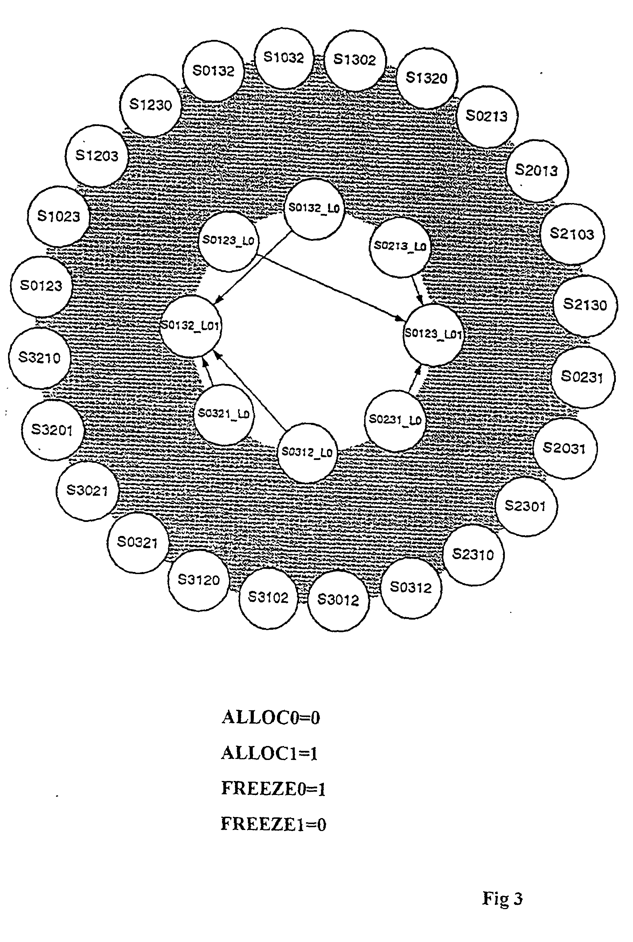

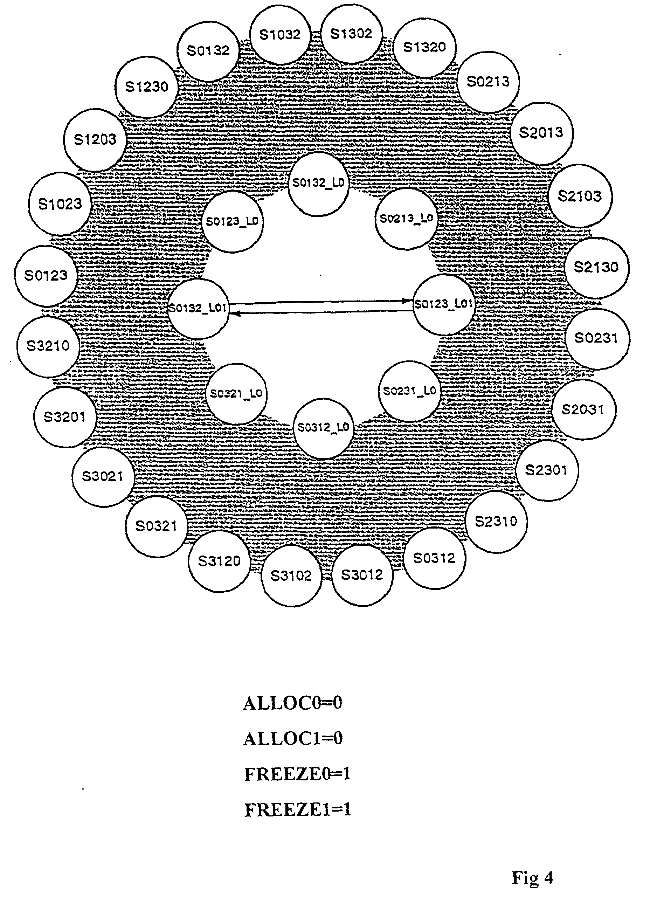

Fig.3 zeigt die möglichen Übergänge zwischen Zuständen mit dem Suffix-L0 in die dedizierten Zustände mit dem Suffix-L01, für die das zusätzliche Einfrieren des Sets 1 vorgesehen ist. Dies geschieht im Allokierungsmodus für den Set 1, welcher durch die Funktionen FREEZE0=1 und ALLOC1=1 bewirkt wird. Bei der Funktion ALLOC1 werden alle Übergänge von L0-Zuständen in L01-Zustände durch Einlesen der Daten aus dem Hauptspeicher in die dedizierten Einträge für den zweiten MRU-Rang erreicht, wobei die Funktion ALLOC1 den Zustand bzw. die Funktion FREEZE0 miteinschließt. Das heißt, daß Set 0 nach wie vor eingefroren bleibt. Nach dem Übergang von den L0-Zuständen in die L01-Zustände werden die L01-Zustände dann eingefroren, was in Fig.4 dargestellt ist.

Fig.4 zeigt den eingefrorenen Zustand für Set 0 und Set 1, was durch die Funktionen FREEZE0=1 und FREEZE1=1 erreicht wird. In diesem Zustand können Cache-Tupel, die sich in einem dedizierten Zustand mit Suffix-L01 befinden, nur in einen Zustand mit dem Suffix-L01 wechseln.

Set 0 und Set 1 bleiben dadurch als MRU-Sets festgeschrieben und dieses Tupel ist dann degeneriert zur 2-wege-Assoziativität.

Das heißt der Cache-Zustand S0132-L01 kann nur in den Zustand S0123-L01 übergehen und umgekehrt. Das heißt, nachdem die Sets 0 und 1 festgeschrieben sind, können nur noch die beiden letzten Sets mit 2 und 3 permutieren, was dann die dargestellten 2 L01-Zustände ergibt. Darüber hinaus gilt, da FREEZE0=1, für Zustände mit den Suffix-L0 das im Textabschnitt zu Fig. 2 beschriebene.

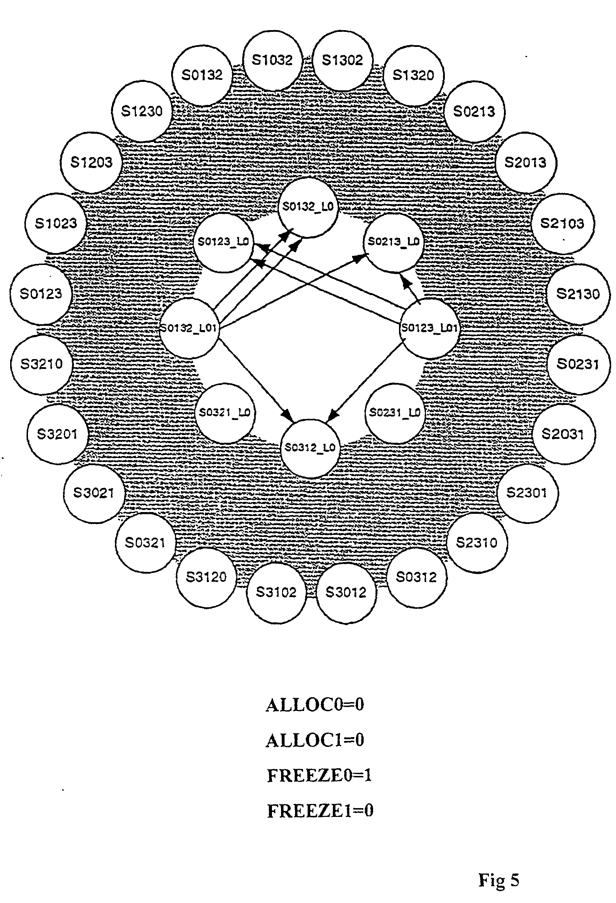

Fig.5 zeigt in einem ersten Schritt die Rückbildung aus den eingefrorenen Cache-Zuständen, wobei hier in einem ersten Schritt die Aufhebung des Einfrierens von Set 1 erfolgt.

Während dieses ersten Schrittes, welcher in Fig.5 dargestellt ist bleibt die Einfrierung von Set 0 beibehalten. Diese erste Rückbildung wird durch die Funktionen FREEZE0=1 und FREEZE1=0 bewirkt, was bedeutet, daß die Funktion FREEZE0 aktiviert und die Funktion FREEZE1 deaktiviert ist. Die Zustände mit dem Suffix-L01 bilden sich dann zurück in Zustände mit dem Suffix-L0.

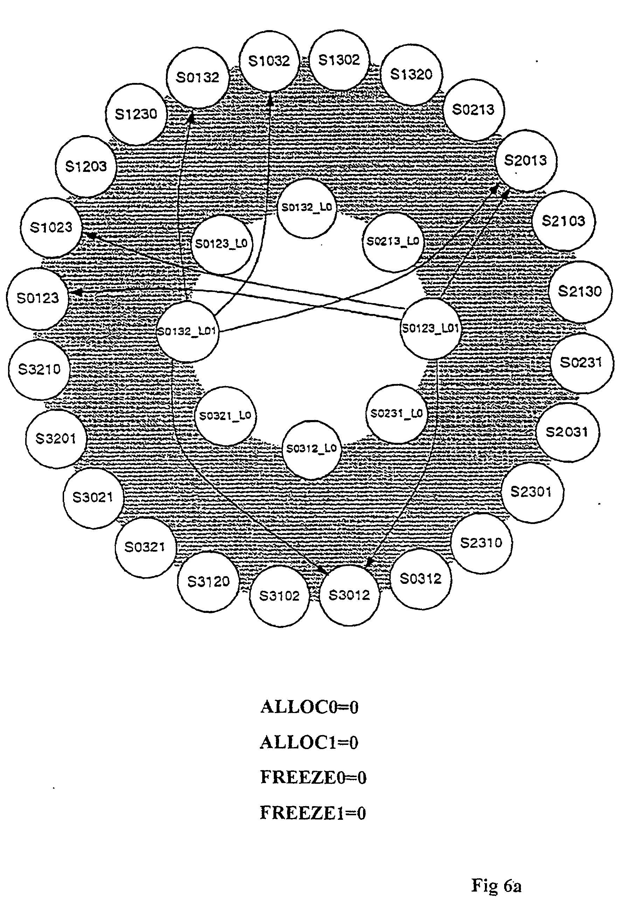

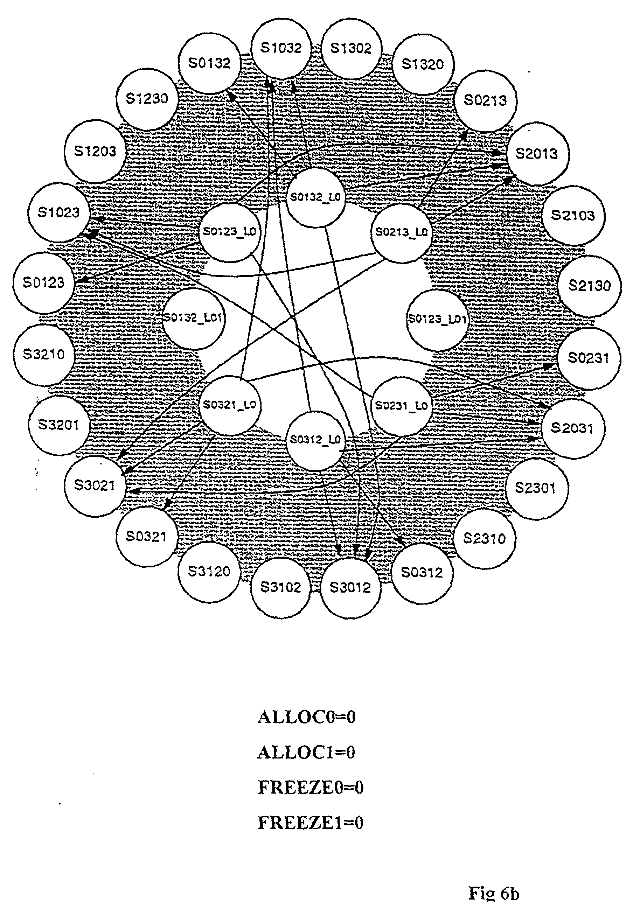

Fig.6 zeigt in zwei Teilfiguren 6a und 6b die Rückbildung des Einfrierens von Set 1 und Set 0 nach vollständigem Aufheben des Einfrierens sowohl des Set 1, als auch des Set 0. Damit sind die beiden Einfrierfunktionen FREEZE0 und FREEZE1 deaktiviert, also gleich 0. Die Fig.6a zeigt dabei die direkte Rückbildung der Zustände mit Suffix-L01, wobei die Fig.6b die Rückbildung der Zustände mit dem Suffix-L0 darstellt.

Um das Verfahren weiterhin zu konkretisieren sei hier gesagt, daß die in den Fig.1-6b dargestellten Bildunterschriften die einzelnen Aktivierungen der 4 benannten Funktionen in Zuordnung auf die dort jeweils dargestellte Figur bezogen sind. Es gilt dabei, daß diese insgesamt 7 kombinierten Aktivierungen der 4 Funktionen die einzig gültigen Kombinationen darstellen, die in diesem Verfahren auftauchen.

Dabei ist es insbesondere also nicht erlaubt, daß die Funktion ALLOC0 und FREEZE0, bzw. ALLOC1 und FREEZE01 gleichzeitig aktiv sind, was in dieser gewählten Nomenklatur heißt, daß sie nicht gleichzeitig den Wert 1 annehmen.

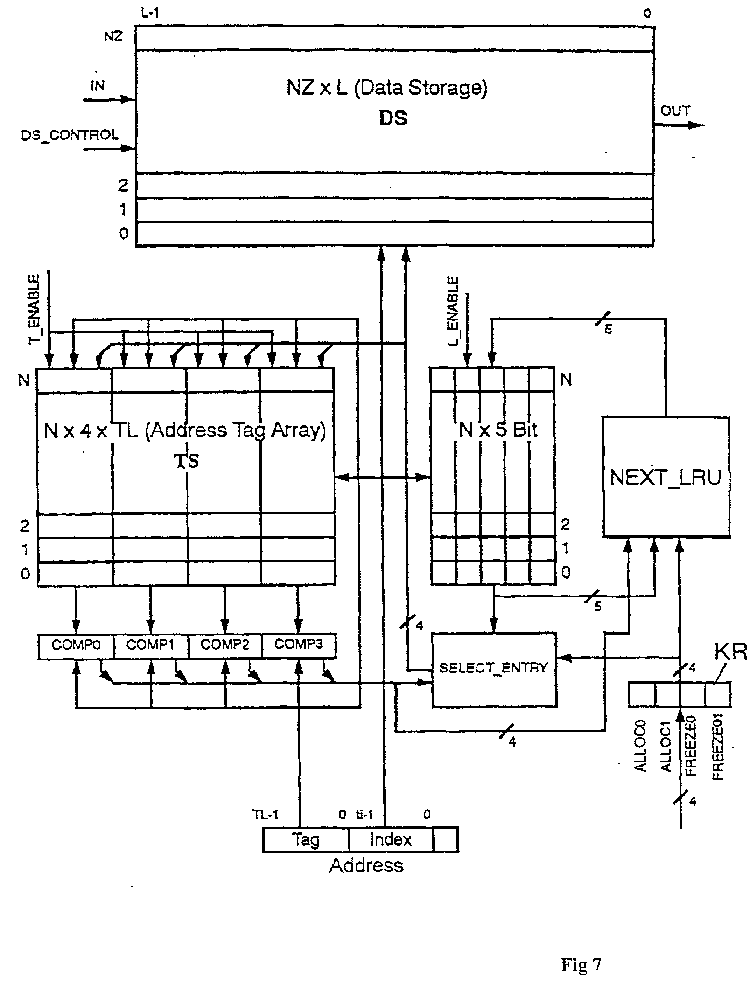

Fig.7 zeigt eine Übersicht aller funktionell verknüpften Einrichtungselemente einer LRU-Steuerung mitsamt den vorgesehenen und verknüpften Einrichtungselementen NEXT- LRU-Dekoder und SELECT-ENTRY-Dekoder. Gesteuert wird dabei der Zugriff auf einen Cache-Speicher DS. Über IN und OUT ist die Verbindung des Cache-Speichers DS zum Prozessor oder zum Hauptspeicher gegeben. Der Cache-Speicher DS besteht aus NZ Zeilen der Größe L für die zu speichernden Daten, einem Tagspeicher TS mit N-Zeilen der Größen A * TL, oder einer Anzahl A Speichern $TS_i$ ($0 \leq i <$ A) mit N-Zeilen der Größe TL für die Cache-Tags. Desweiteren ist ein LRU-Speicher LRUS mit N-Zeilen zu je 5 Bit, und ein Satz von A Komperatoren $COMP_i$ zum Vergleich der Tags mit aktuellen Adressen vorgesehen, sowie ein programmierbares bzw. extern steuerbares Kontrollregister KR zur Bereitstellung der Steuersignale ALLOC0, ALLOC1, FREEZE0 und FREEZE01. Desweiteren ist der Logikblock SELECT-ENTRY-Dekoder zum Auskodieren des LRU-Eintrages vorgesehen, sowie ein weiterer Logikblock NEXT-LRU-Dekoder zur Realisierung aller Zustandsübergänge zwischen den 24 LRU-Kodierungen entsprechend dem vollständigen Standard-4-wege-LRU und den dazu erfindungsgemäßen 8 Erweiterungen.

Die dargestellten Einrichtungselemente sowie ihre funktionale Verknüpfung zeigen eine 4-wege-assoziative Cache-Implementierung, bei welcher der Datenzugriff des Prozessors auf den Cache-Speicher bzw. des Cache-Speichers auf den Hauptspeicher in der erfindungsgemäßen Weise realisierbar ist. Über ein Kontrollregister KR sind 4 Funktionen ALLOC0, ALLOC1, FREEZE0 und FREEZE01 erzeugbar.

Die Adressverwaltung erfolgt über einen Tagspeicher TS welcher in Korrespondenz mit dem LRU-Speicher LRUS steht. In der dargestellten Realisierung enthält der Tagspeicher je Index 4 Einträge entsprechend einem 4-wege-assoziativen Cache-Organisation und LRUS ist 5 Bit breit. In diesem LRU-Speicher wird die Zugriffshistorie OLD-LRU der Adresseinträge für jeden Index individuell verwaltet. Erfindungswesentlich ist hierbei, daß ein beliebiger, bekannter vollständiger LRU-ALGORITHMUS verwendet werden kann, der in erfindungsgemäßer Weise erweitert wird. Am Ausgang des LRU-Speichers LRUS steht bei jedem Zugriff die bisherige Zugriffshistorie OLD-LRU für den aktuellen Zugriffsindex zur Verfügung. Der Tagspeicher TS liefert die Vergleichsadressen inklusive Adresstatus für den aktuellen Zugriffsindex. Die Komparatoren $COMP_i$ bestimmen den aus 4 Leitungen bestehenden Hitstatus HS für den aktuellen Zugriff. Der NEXT-LRU-Dekoder bestimmt aus der bisherigen Zugriffshistorie, dem Hitstatus HS und den Steuersignalen ALLOC0, ALLOC1, FREEZE0 und FREEZE01 die neue Zugriffshistorie NEW-LRU. NEXT-LRU realisiert dabei die erfindungsgemäß erweiterten Übergänge von OLD-LRU zu NEW-LRU entsprechend den Abbildungen 1 bis 6b.

Der SELECT-ENTRY-Dekoder bestimmt aus OLD-LRU, Hitstatus HS und den Kontrollsignalen ALLOC0, ALLOC1, FREEZE0 und FREEZE01 den von der Transaktion betroffen Eintrag zum aktuellen Index und setzt die SELECT-Leitungen für die 4 Sets entsprechend.

Die gesetzte Leitung entspricht dem sich aus NEW-LRU ergebenden MRU-Eintrag.

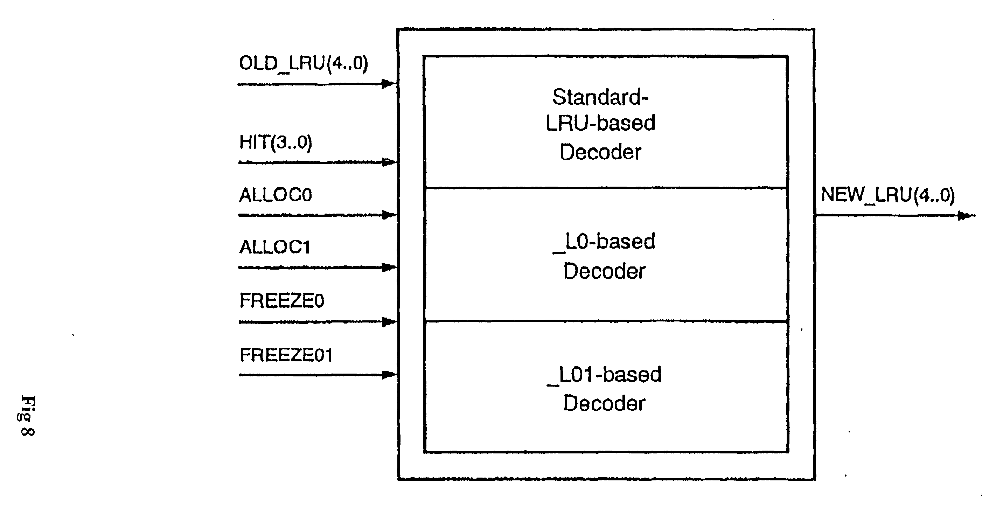

Fig.8 zeigt den erfindungsgemäß anzusteuernden NEXT-LRU-Dekoder. Dieser NEXT-LRU-Dekoder besteht aus der logischen Erweiterung eines Standard-LRU-Dekoders um die genannten erfindungsgemäßen L0- und L01-Dekoder.

In diesem Dekoder werden unter Berücksichtigung der Standard LRU die entsprechenden Zuordnungen der Standard-LRU-Zustände, welche in dieser Form nicht einfrierbar sind, zu den erfindungsgemäß einfrierbaren LRU Zuständen, bei den der Set 0 und der Set 1 einfrierbar sind, vollzogen. Somit erhält der NEXT-LRU-Dekoder am Eingang den bisherigen LRU-Zustand OLD-LRU, sowie das Signal der 4 HIT-Leitungen, welche signalisieren, auf welchem Set gerade eine LRU Aktualisierung stattgefunden hat, sowie 4 Signale zur Generierung der Funktionen ALLOC0, ALLOC1, FREEZE0 und FREEZE01. Am Ausgang liefert der NEXT-LRU-Dekoder dann unter Berücksichtigung der erfindungsgemäßen Erweiterung den LRU-Code.

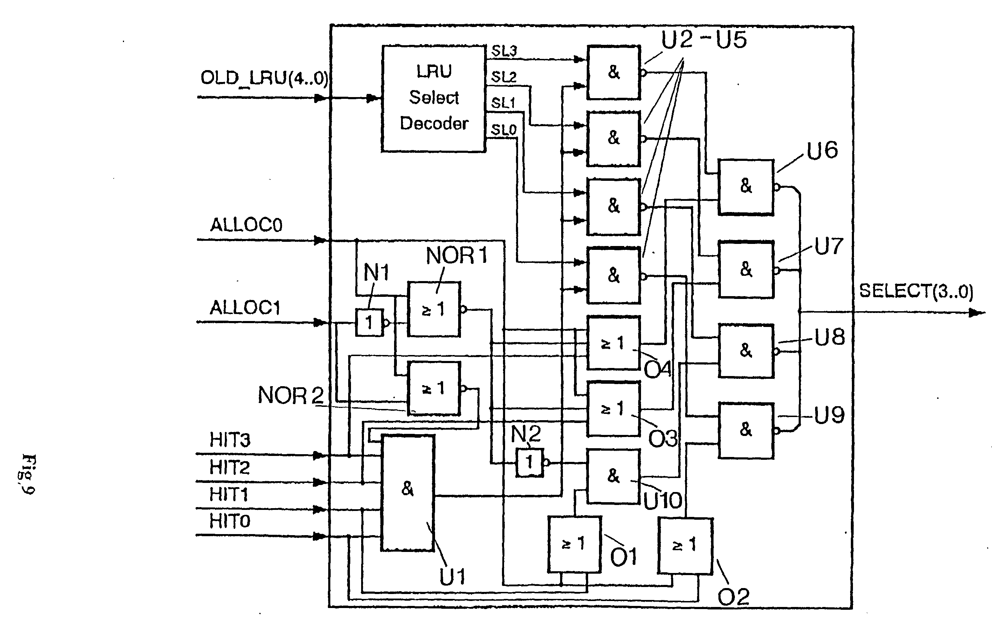

Fig.9 zeigt den SELECT-ENTRY-Dekoder, welcher aus den Eingangssignalen OLD-LRU, ALLOC0, ALLOC1, HIT0 - HIT3, am Ausgang 4 SELECT-Signale erzeugt, über die die 4 Sets des Cache-Speichers DS (aus Fig.7) steuerbar sind. Der LRU-Zustand OLD-LRU wird innerhalb des SELECT-ENTRY-Dekoders einem LRU-SELECT-Dekoder zugeführt, welcher am Ausgang dann 4 high-aktive Leitungen SL0-SL3 führt. Diese sind jeweils auf einen Eingang von jeweils 4 NAND-Gliedern U2-U5 geführt. Die 4 HIT-Leitungen HIT0 - HIT3, welche von den Adressvergleichern COMPi (COMP0-COMP3) kommen, werden einem UND-Glied U1 zugeführt.

Diese aus den Adressvergleichem COMPi (Fig.7) kommenden HIT-Leitungen sind 0-aktiv. Sie signalisieren, ob ein Cache-HIT (Aktualisierung des jeweiligen Cache-Eintrages) stattgefunden hat, oder aber ein Cache-MISS vorliegt, bei dem alle Leitungen inaktiv, daß heißt eins sind. Bei den oben genannten high-aktiven Leitungen SL0 bis SL3 liegt die Information vor, welche der 4 Einträge der LRU-Eintrag ist. Das führt dazu, daß genau eine der entsprechenden high-aktiven Leitungen SL0-SL3 den Wert 1 hat, und die anderen den Wert 0.

Die Verknüpfungen der 4 HIT-Leitungen HIT0-HIT3 durch das UND-Gatter U1 wird vorgenommen, um das 1-aktive MISS-Signal zu erzeugen. Am Eingang des UND-Gliedes U1 sind die Funktionen ALLOC0 und ALLOC1 mit eingebunden. Ist ein Allokierungsmodus gewählt, so ist das gleiche Verhalten wie bei einem MISS gewünscht. Wie diese ALLOC0- und ALLOC1-Signale erzeugt werden ist weiter unten noch dargestellt. Das 1-aktive MISS-Signal, welches am Ausgang des UND-Gatters U1 vorliegt, wird dabei als jeweils als zweiter Eingang auf die mit den SELECT-Leitungen SL0-SL3 verbundenen NAND-Gatter U2-U5 geschaltet. Daduch werden die SL-Signale nur im Falle eines MISS für das SELECT-Signal relevant. Im Falle eines HIT, ergibt sich das SELECT-Signal bzw. das jeweilige SELECT-Signal direkt aus dem HIT-Signal.

Die HIT-Signale werden über den fünften Eingang des UND-Gliedes U1 noch durch die ALLOC-Signale ALLOC0 und ALLOC1 "maskiert" und überschrieben, um im Falle der Allokierung das entsprechende SELECT-Signal zu erzeugen, mit dem die entsprechenden Datenseteinträge 0 bzw. 1 festzuschreiben sind. Die zweite NAND-Gatterstufe U6-U9 erzeugt jeweils das oben genannte entsprechende SELECT-Signal. Einer der Eingänge ist daher mit einem jeweiligen Ausgangssignal des NAND-Gatters U2-U5 verschaltet. Der übrigbleibende zweite Eingang der NAND-Glieder U6-U9 wird von der Allokierungslogik belegt, bzw. angesteuert. Das ALLOC0-Signal liegt an jeweils einem Eingang zweier NOR-Glieder NOR1 und NOR2 an. Desweiteren liegt das ALLOC0-Signal gleichzeitig an jeweils einem von zwei Eingängen zweier ODER-Glieder O1 und 02 an.

Die beiden anderen Eingänge der ODER-Glieder O1 und 02 sind von den HIT-Leitungen HIT0 und HIT1 belegt. Der Ausgang des ODER-Gliedes 02 liegt am Ausgangs-NAND-Glied U9 zur Erzeugung des entsprechenden SELECT-Signales an. Der Ausgang des ersten ODER-Gliedes O1 liegt dabei an einem der beiden Eingänge eines UND-Gliedes U10 an, welches ausgangsseitig an einem der beiden Eingänge des NAND-Gliedes U8 zur Erzeugung des entsprechenden SELECT-Signales anliegt. Der zweite Eingang des UND-Gliedes U10 ist mit dem Ausgang des NOR-Gliedes NOR1 verbunden, welches hierbei noch über ein NICHT-Glied N2 geführt wird. Gleichzeitig liegt der Ausgang des NOR-Gliedes NOR1 noch jeweils an einem von 3 Eingängen zweier ODER-Glieder 03 und 04 an. Diese beiden ODER-Glieder 03 und 04 steuern dabei jeweils den zweiten Eingang der NAND-Glieder U6 und U7, welche die verbleibenden 2 SELECT-Signale erzeugen. Die zweiten der jeweils 3 Eingänge der ODER-Glieder 03 und 04 sind direkt mit den HIT-Leitungen HIT2 und HIT3 verbunden. Der jeweilige dritte Eingang der ODER-Glieder 03 und 04 ist wiederum direkt mit dem Statussignal ALLOC0 verbunden. Das Signal bzw. Statussignal ALLOC1 wird zum einen direkt dem zweiten Eingang des NOR-Gliedes NOR2 und über ein NICHT-Glied N1 dem zweiten Eingang des NOR-Gliedes NOR1 zugeführt. Der Ausgang des NOR2-Gliedes liegt dabei direkt am fünften Eingang des UND-Gliedes U1 an.

Die Verschaltung der ALLOC0 und ALLOC1-Signale innerhalb des SELECT-ENTRY-Dekoders bewirkt die im verfahrensmäßigen Teil der Erfindung beschriebenen Funktion.

Desweiteren können in der Praxis weitere Signale in Abhängigkeit des vom Prozessors verlangten Cache-Protokolles in die Logik gemäß der Darstellung von Fig.7 bzw. Fig.8 und Fig.9 eingehen, bzw. berücksichtigt werden.

Wichtig ist hierbei noch zu erwähnen, daß das hardwaremäßige Anlegen der Logik gemäß Fig 9 nur eine exemplarische Ausführung ist. Es ist daher möglich, die gleichen Endfunktionen, nämlich das verfahrensgemäße Ansprechen der Cache Sets durch die SELECT-Signale durch modifizierte Verschaltung zu erreichen. Wichtig ist somit, den bisherigen LRU-Status OLD-LRU mit den Hit-Signalen logisch zu verknüpfen und diese mit den Steuerfunktionen ALLOC0 und ALLOC1 sowie FREEZE0 und FREEZE01-zu maskieren. Dabei sind die Signale bzw. die Elemente sowohl in Fig7 als auch in Fig 9 so verknüpft, daß die oben beschriebene Verriegelung gegeben ist. D. h. daß das gleichzeitige Aktivieren der Funktionen ALLOC0 und FREEZE0 bzw. ALLOC 1 und FREEZE01 verhindert wird.

## Bezugszeichenliste

| | |
|---|---|
| LRU = | "Least recently used" |
| MRU = | "most recently used" |
| Tupel = | Aktualitätszustände,- rangfolge |
| DS = | Cachespeicher |
| LRUS = | LRU-Speicher |
| SELECT-ENTRY = | Logikblock / SELECT-ENTRY-Dekoder |
| NEXT-LRU = | Logikblock../ LRU-Dekoder |
| COMP0-COMP3 = | Komparatoren |
| SL0-SL3 = | Leitungen (high-aktiv) |
| HIT0-HIT3 = | Hit-Leitungen |
| KR = | Kontrollregister |
| TS = | Tagspeicher |
| S = | Cachegröße |
| L = | Cachezeilengröße |
| NZ = | Anzahl der Cachezeilen (NZ=S/L) |
| A = | Anzahl der Cache Sets (hier A=4) |
| N = | Anzahl der Tag-Indizes (N=NZ/A) |
| ti = | Tag-Index (ti'=log2 (N)) |
| TL = | Taggröße |
| OLD-LRU = | bisheriger LRU-Status |
| NEW-LRU = | neuer LRU-Status |
| HS = | Hitstatus |
| SELECT = | Signal zur Steuerung der jeweiligen Cache-Sets |
| U1,U10 = | UND-Glieder |
| U2-U9 = | NAND-Glieder bzw. NAND-Gatter |
| N1, N2 = | NICHT-Glieder |
| NOR1, NOR2 = | NOR-Glieder |
| O1-O4 = | ODER-Glieder |

## Patentansprüche

1. Verfahren zur Steuerung der Datenverfügbarkeit in Zwischenspeichern von Computern, wobei der Hauptspeicheradressraum über eine A-wege-assoziative Abbildung auf den kleineren Zwischen-Speicheradressraum abgebildet wird, und von den durch die Abbildung erhaltenen A=4 oder A=3 Daten-Sets jeweils der Set, dessen Benutzung am längsten zurückliegt, überschrieben wird, und sich die Anzahl der möglichen chronologischen Aktualitätszustände (Tupel) zu X = A! ergibt, **dadurch gekennzeichnet, daß** von der Gesamtanzahl der A Sets ein oder mehr Sets zumindest temporär eingefroren werden, und das besagte Verfahren lediglich für die verbleibenden übrigen Sets durchgeführt wird, indem zur Auskodierung der möglichen Anzahl der Aktualitätszustände der A Sets ein Code, bestehend aus einer Anzahl von Lc Bits erzeugt wird, wobei gilt:

$$2^{(Lc-1)} \leq X < 2^{Lc}$$

und daß über die verbleibende Anzahl von Kodierungsmöglichkeiten eine Anzahl fc = $2^{Lc}$ - X Aktualitätszustände der einfrierbaren sets definiert werden, um lediglich einen Teil der möglichen Anzahl von X Aktualitätszuständen einfrieren zu können, so daß die Verfügbarheit der Daten in eingefrorenen Sets in einer garantierten Antwortzeit gegeben ist.

2. Verfahren zur Steuerung der Datenverfügbarkeit in Zwischenspeichern von Computern, nach Anspruch 1. **dadurch gekennzeichnet, daß** die definierten einfrierbaren Cache-Zustände aus p=X/A Zuständen bestehen, die genau einen der A=4 Einträge als MRU-Eintrag, d.h. als aktuellster Eintrag festschreiben und daß die übrigen q= (X/A)/(A-1) Zustände in rekursiver Anwendung des Verfahrens genau einen weiteren der A=4 Einträge als zweiten MRU-Rang festschreiben, wobei die q= (X/A)/(A-1) Zustände nur aus den X/A zuvor eingefrorenen Zuständen erreichbar sind.

3. Verfahren zur Steuerung der Datenverfügbarkeit in Zwischenspeichern von Computern, nach Anspruch 1, **dadurch gekennzeichnet, daß** die Übergänge zwischen den Zuständen mit einem eingefrorenen Eintrag untereinander noch derart erfolgen können, daß die Zugriffsaktualität entsprechend einem 3-wege-LRU (A=3) nachgehalten werden, und daß die Übergänge zwischen den 2 Zuständen mit zwei eingefrorenen Einträgen untereinander noch derart erfolgen können, daß die Zugriffsaktualität entsprechend einem 2-wege-LRU (A=2) nachgehalten werden kann.

**4.** Verfahren zur Steuerung der Datenverfügbarkeit in Zwischenspeichern von Computern, nach Anspruch 2,
**dadurch gekennzeichnet,**
**daß** die definierten einfrierbaren Zustände (Zustände_L0 und Zustände_L01) durch 4 Funktionen generiert werden,

  a) ALLOC0: alle Übergänge in_L0-Zustände vorbereiten durch Einlesen der einzufrierenden Daten aus dem Hauptspeicher in die dedizierten MRU-Einträge, d.h. in die aktuellster Einträge,

  b) FREEZE0: alle Zustände mit_L0 einfrieren,

  c) ALLOC1: alle Übergänge von _L0-Zuständen in_L01-Zustände durch Einlesen der Daten aus dem Hauptspeicher in die dedizierten Einträge für den zweiten MRU-Rang, wobei ALLOC1 den Zustand FREEZE0 miteinschließt,

  d) FREEZE01: alle Zustände mit_L0 und_L01 einfrieren.

## Claims

**1.** Method to control the data availability in cache memory of computers, in which the adressroom of the main memory is reflected over an A-way-associative reproduction on a smaller cache memory adressroom; and from by the reproduction resulted A=4 or A=3 data-sets each of the sets which is longest time not in use, will be overwritten, and the possible number of chronological actualitystates (Tupel) will be X=A!,
**characterised in,**
**that** from the complete number of A sets, one or more sets at least temporarily will be frozen, and the method will only be continued for the rest of the sets, while for Coding of the possible number of actualitystates of the A sets, a code consists in a number of Lc Bits is generated, by

$$2^{(Lc-1)} \leq X < 2^{Lc}$$

and that over the rest number $fc = 2^{Lc} - X$ of possible codes of the freezeable sets will be defined, for only a part of the possible number of X actualitystates to freeze, so that the data availibility in the frozen sets in a garantied responsetime is effected.

**2.** Method to control the data availibility in cache memory of computers, according to claim 1,
**characterised in,**
**that** the defined freezeable cachestates consists of p=X/A states, which establish exactly one of the A=4 entries as MRU-entry, that means as Most Recently Use - Entry, and that the other q = (X/A) / (A - 1) states in appeal use of the method establish exactly one more of the A = 4 entries as second MRU, in which the q = (X/A) /(A-1) states are only reachable out of the X/A before frozen states.

**3.** Method to control the data availibility in cache memory of computers, according to claim 1,
**characterised in,**
**that** the transition between the states with one frozen entry each other, can be realised also, that the actuality in use, will be managed like a 3-way LRU (A = 3) (Least Recently Used), and that the transitions between 2 states with two frozen entries each other can be realised also, that the actuality in use will be managed like a 2-way LRU (A = 2).

**4.** Method to control the data availibility in cache memory of computers, according to claim 2, **characterised in, that** the defined freezeable states (states L0 and states L01) are generated by 4 functions,

  a) ALLOC0: prepare all transitions in L0-states by reading of the datas to be freeze out of the main memory, into the determined MRU-entries, that means in the most actual entries,

  b) FREEZE0: freeze all states with L0,

  c) ALLOC1, all transitions from L0-states in L01-states by reading data from out of the main memory into the determined entries for the second MRU, in which ALLOC1 encloses also the state FREEZE0,

  d) FREEZE01: freeze all states with L0 and L01.

## Revendications

**1.** Procédé pour la commande de la disponibilité des données dans des mémoires temporaires d'ordinateurs, dans lequel l'espace adresse de la mémoire centrale est reproduit via une reproduction associative comprenant A voies sur le plus petit espace adresse de la mémoire temporaire, et à partir des A = 4 ou de A = 3 groupes de données obtenus via la reproduction, respectivement le groupe dont l'utilisation remonte le plus loin dans le temps est soumis à une réécriture avec écrasement, et le nombre des états d'actualité chronologiques possibles (n-uplets) se rapporte à X = A, **caractérisé en ce que**, à partir du nombre total des A groupes, un ou plusieurs groupes est ou sont gelés de manière au moins temporaire, et on met en oeuvre ledit procédé uniquement pour les autres groupes qui subsistent en générant, pour le codage du nombre possible des états d'actualité des A groupes, un code constitué par une série de Lc bits en fonction de la formule :

$$2^{(Lc-1)} \le X < 2^{Lc}$$

et **en ce que**, parmi le nombre restant de possibilités de codage, on définit un nombre fc = $2^{Lc}$ - X d'états d'actualité des groupes aptes à être gelés pour pouvoir geler uniquement une partie du nombre possible de X états d'actualité, de telle sorte que la disponibilité des données dans les groupes gelés est fournie dans un temps de réponse garanti.

2. Procédé pour la commande de la disponibilité des données dans des mémoires temporaires d'ordinateurs, selon la revendication 1, **caractérisé en ce que** les états antémémoires définis aptes à être gelés sont constitués par p = X/A états qui enregistrent exactement une des A = 4 entrées à titre d'entrée MRU (Most Recently Used = la plus récemment utilisée), c'est-à-dire à titre d'entrée la plus actuelle, et **en ce que** les autres q= (X/A)(A-1) états, dans une utilisation récurrente du procédé, enregistrent précisément une autre des A = 4 entrées à titre de MRU de deuxième rang, les q=(X/A)(A-1) états n'étant accessibles qu'à partir des X/A états gelés au préalable.

3. Procédé pour la commande de la disponibilité des données dans des mémoires temporaires d'ordinateurs, selon la revendication 1, **caractérisé en ce que** les transitions réciproques entre les états comprenant une entrée gelée peuvent encore avoir lieu en faisant durer l'actualité d'accès correspondant à une LRU (Least Recently Used = la moins récemment utilisée) à 3 voies (A = 3) et **en ce que** les transitions réciproques entre les deux états comprenant deux entrées gelées peuvent encore avoir lieu de telle sorte que l'on peut faire durer l'actualité d'accès correspondant à une LRU à 2 voies (A = 2).

4. Procédé pour la commande de la disponibilité des données dans des mémoires temporaires d'ordinateurs, selon la revendication 2, **caractérisé en ce que** les états définis aptes à être gelés (les états_L0 et les états_L1) sont générés par quatre fonctions :

    a) ALLOC0 ; préparer toutes les transitions dans les états_L0 par une mise en mémoire des donnés à geler à partir de la mémoire centrale dans les entrées MRU dédicacées, c'est-à-dire dans les entrées les plus actuelles,

    b) FREESE0 : geler tous les états de valeur _L0,

    c) ALLOC1 : procéder à toutes les transitions des états_L0 en états_L01 par la mise en mémoire des données à partir de la mémoire centrale dans les entrées dédicacées pour la MRU de deuxième rang, ALLOC1 englobant l'état FREEZE0,

    d) FREEZE01 : geler tous les états_L0 et _L01.

ALLOC0=1

ALLOC1=0

FREEZE0=0

FREEZE1=0

Fig 1

ALLOC0=0

ALLOC1=0

FREEZE0=1

FREEZE1=0

Fig 2

ALLOC0=0

ALLOC1=1

FREEZE0=1

FREEZE1=0

Fig 3

ALLOC0=0

ALLOC1=0

FREEZE0=1

FREEZE1=1

Fig 4

ALLOC0=0

ALLOC1=0

FREEZE0=1

FREEZE1=0

Fig 5

**ALLOC0=0**

**ALLOC1=0**

**FREEZE0=0**

**FREEZE1=0**

Fig 6a

ALLOC0=0

ALLOC1=0

FREEZE0=0

FREEZE1=0

Fig 6b

Fig 7

Fig 8

Fig. 9